# EUROPÄISCHE PATENTSCHRIFT

(11) **EP 2 792 556 B1**
(45) Veröffentlichungstag und Bekanntmachung des Hinweises auf die Patenterteilung: **04.10.2017**
(21) Anmeldenummer: 13163677.1
(22) Anmeldetag: 15.04.2013
(51) Int. Cl.: B60S 1/34, B60S 1/08

(54) **Wischvorrichtung**
Lens wiper
Dispositif d'essuyage

(43) Veröffentlichungstag der Anmeldung: 22.10.2014
(73) Patentinhaber: SMR Patents S.à.r.l., 1653 Luxembourg (LU)
(72) Erfinder: Herrmann, Andreas, 71367 Winnenden (DE)
(74) Vertreter: Weber-Bruls, Dorothée

(56) Entgegenhaltungen:
- EP-A1- 1 238 874
- EP-A2- 1 493 641
- DE-A1-102012 210 192
- DE-C1- 3 709 476
- FR-A1- 2 832 968
- US-A1- 2003 000 040
- US-A1- 2009 307 861
- US-B1- 6 446 301

## Beschreibung

Die Erfindung betrifft eine Wischvorrichtung für eine Optikeinrichtung eines Kraftfahrzeugs, mit mindestens einem Wischelement, das beim Überführen von einer ersten Endstellung in eine zweite Endstellung über eine Oberfläche eines scheiben- und/oder kalottenförmigen Optikelements der Optikeinrichtung bewegbar ist, und mit mindestens einer Antriebseinheit, die mindestens ein Haltemittel zum Festlegen des Wischelements an der Antriebseinheit sowie mindestens ein erstes Antriebsmittel und mindestens ein zweites Antriebsmittel umfasst, von denen mindestens ein Antriebsmittel zumindest abschnittsweise mindestens ein Formgedächtniselement aufweist. Darüber hinaus betrifft die Erfindung eine Optikeinrichtung für ein Kraftfahrzeug mit einer derartigen Wischvorrichtung sowie ein Verfahren zum Reinigen einer derartigen Optikeinrichtung mit einer derartigen Wischvorrichtung.

Eine gattungsgemäße Wischvorrichtung ist bekannt aus DE 37 09 476 C1, bei der ein Wischelement durch zwei jeweils Torsionselemente umfassende Antriebsmittel von der ersten Endstellung in die zweite Endstellung mittels Rotationsbewegung beziehungsweise Drehbewegung überführt wird. Hierbei hat es sich als nachteilig herausgestellt, dass durch das Umsetzen der Torsionsbewegung der Torsionsstangen in eine Drehbewegung des Wischelements hohe Drehmomente auftreten und hierdurch eine hohe Antriebskraft vorgehalten werden muss. Dokument DE 10 2012 210 192 offenbart eine Kupplung, in der ein Formgedächtniselement angeordnet ist, um bei einer Aktivierung, eine Welle entgegen der Kraft einer Vorspannfeder zu verschieben, damit diese mit einer Klauenkupplung in Eingriff tritt. Aufgabe der Erfindung ist, eine alternative, zweckmäßige Bauform einer Wischvorrichtung zur Verfügung zu stellen.

Diese Aufgabe wird durch eine eingangs genannte Wischvorrichtung erfindungsgemäß dadurch gelöst, dass das erste Antriebsmittel und/oder das zweite Antriebsmittel mindestens eine Kinematik umfasst, durch die das Wischelement von der ersten Endstellung in die zweite Endstellung durch eine Translationsbewegung, insbesondere Linearbewegung, überführbar ist. Das Optikelement der Optikeinrichtung kann grundsätzlich ein beliebiges optisches Element umfassen. Solchenfalls kann es beispielsweise eine Glas oder Kunststoffscheibe, ein Prisma und/oder eine Linse umfassen. Wenn das Optikelement beispielsweise eine Scheibe umfasst, kann es eine Fahrzeugscheibe oder eine Abdeckscheibe, die beispielsweise vor einer Kamera oder einem Sensor angeordnet ist, umfassen.

Die Antriebseinheit kann das Optikelement überfangen oder in einem seitlichen Bereich, neben dem Optikelement angeordnet sein. Dadurch, dass das erste Antriebsmittel und/oder das zweite Antriebsmittel eine Kinematik zur Verfügung stellt, mit dem das Wischelement mit einer Translationsbewegung, insbesondere Linearbewegung, von der ersten Endstellung in die zweite Endstellung überführbar ist, ist eine alternative, zweckmäßige Bauform des Wischelements zur Verfügung gestellt.

Hierdurch ist insbesondere das Auftreten von hohen Drehmomenten, mit denen die Antriebseinheit auf das Wischelement wirkt, zumindest reduziert.

Um die Kinematik der Wischvorrichtung zu erzwingen oder zu unterstützen, erweist es sich als vorteilhaft, wenn die Wischvorrichtung mindestens ein Führungsmittel zum Führen und/oder Vorgeben der Translationsbewegung, insbesondere Linearbewegung, der mindestens einen Antriebseinheit umfasst.

Das Führungsmittel kann hierbei grundsätzlich beliebig ausgebildet sein, sofern hierdurch das Überführen des Wischelements mittels Translationsbewegung, insbesondere Linearbewegung, erzwungen oder unterstützt wird. Dieses lässt sich auf einfache Weise umsetzen, wenn das mindestens eine Führungsmittel mindestens eine Führungsschiene und mindestens ein in der Führungsschiene gleitend bewegbares Schlittenelement umfasst und/oder wenn das Schlittenelement am Haltemittel, am ersten Antriebsmittel und/oder am zweiten Antriebsmittel anordenbar oder angeordnet ist, insbesondere einstückig mit dem Haltemittel, dem ersten Antriebsmittel und/oder dem zweiten Antriebsmittel ausgebildet ist.

Das erste Antriebsmittel und/oder das zweite Antriebsmittel der Antriebseinheit können beispielsweise durch elektromotorische Mittel zur Verfügung gestellt werden. Die Antriebseinheit beziehungsweise das erste Antriebsmittel und/oder das zweite Antriebsmittel lassen sich kostengünstig und einfach gestalten, wenn das erste Antriebsmittels und/oder das zweite Antriebsmittel mindestens ein Rückstellmittel, insbesondere Rückstellfeder, umfasst, die das Wischelement in die erste Endstellung vorspannt und/oder wenn das erste Antriebsmittel und/oder das zweite Antriebsmittel mindestens eine Formgedächtnisfeder aufweist, die das mindestens eine Formgedächtniselement umfasst und mit der das Wischelement in die zweite Endstellung überführbar ist.

Vorzugsweise ist das das Formgedächtniselement umfassende Antriebsmittel elektrisch mit einer Steuereinheit verbunden. Durch die Steuereinheit wird das Formgedächtniselement erhitzt beziehungsweise bestromt, wodurch es sich verkürzt. Hierdurch wird das Wischelement von der ersten Endstellung in die zweite Endstellung überführt. Zum Zurückführen des Wischelements aus der zweiten Endstellung in die erste Endstellung wird das Bestromen beziehungsweise das Erhitzen des ersten Antriebsmittel beendet, wodurch sich dieses abkühlt. Beim Unterschreiten einer bestimmten Temperatur ist das erste Antriebsmittel, insbesondere das Formgedächtniselement, wieder elastisch verformbar, wodurch es durch das zweite Antriebsmittel in die erste Endstellung zurückgeführt wird.

Es hat sich als vorteilhaft herausgestellt, wenn das Wischelement einen biegesteifen Wischkörper umfasst, der mindestens einen Wischabschnitt umfasst, der korrespondieren, insbesondere komplementär, zur Oberfläche des Optikelements ausgebildet ist, und/oder dass das Wischelement einen zumindest biegeelastischen Körper umfasst.

In Weiterbildung letztgenannter Ausführungsform erweist es sich als vorteilhaft, wenn der Wischkörper einen Kunststoff, insbesondere eine Gummilippe, umfasst.

Unter einer Gummilippe kann beispielsweise ein faden- oder streifenförmiger Körper verstanden werden, der zumindest biegeelastisch ist.

Um die Reinigungswirkung der Oberfläche des Optikelements durch das Überführen des Wischelements von der ersten Endstellung in die zweite Endstellung zu erhöhen erweist es sich als vorteilhaft, wenn die Wischvorrichtung mindestens ein Spannmittel umfasst, mit dem das Wischelement in Richtung auf die Oberfläche des Optikelements spannbar ist.

Das Spannmittel kann an dem Haltemittel festgelegt sein und das Haltemittel in Richtung auf die Optikeinrichtung spannen.

Ferner ist es denkbar, dass das Spannmittel und das Wischelement durch voneinander separate oder separierbare Einzelteile gebildet sind. Ferner ist es denkbar, dass das Spannmittel und das Wischelement ein und dasselbe Bauteil umfassen. Dieses ist bevorzugt dann der Fall, wenn das Wischelement einen zumindest biegeelastischen Körper umfasst, insbesondere eine Dichtlippe.

Bei einer Ausführungsform der Wischvorrichtung umfasst diese mindestens ein Spannmittel, mindestens zwei Antriebseinheiten, mindestens ein zwei im Wesentlichen parallel zueinander erstreckt verlaufende Führungsschienen umfassendes Führungsmittel und mindestens ein Wischelement, das mit seinen Enden an den Haltemitteln der beiden Antriebseinheiten festgelegt ist.

Hierdurch ist das Wischelement auf zwei Seiten festgelegt wodurch eine homogene Anpresskraft des Wischelements an die Oberfläche des Optikelements erzielt wird. Ferner kann hierdurch die Reinigungswirkung der Wischvorrichtung erhöht sein.

Grundsätzlich können die beiden Antriebseinheiten bezüglich des Optikelements an einer beliebigen Stelle angeordnet werden. Beispielsweise können die Antriebseinheiten derart angeordnet sein, dass sie das Optikelement überfangen. Ferner kann zumindest eine der beiden Antriebseinheiten seitlich des Optikelements angeordnet sein. Um die Reinigungswirkung des Wischelements beim Überführen von der ersten Endstellung in die zweite Endstellung zu erhöhen, erweist es sich als vorteilhaft, wenn die Haltemittel derart angeordnet sind, dass die Enden des Wischelements unterhalb der höchsten Erhebung des kalottenförmig ausgebildeten Optikelements angeordnet sind. Hierdurch schmiegt sich das Wischelement an alle Bereiche der Kontur des Optikelements an.

Um die Wischwirkung weiter zu erhöhen, erweist es sich als vorteilhaft, wenn das Wischelement in der ersten Endstellung berührungsfrei zu einem Rand der Oberfläche des Optikelements beabstandet ist oder in einem Randbereich des Optikelements an der Oberfläche anliegend angeordnet ist und/oder wenn das Wischelement in der zweiten Endstellung zu einem Rand der Oberfläche des Optikelements auf einer der ersten Endstellung gegenüberliegenden Seite des Optikelements beabstandet ist oder in einem Randbereich auf der der ersten Endstellung gegenüberliegenden Seite des Optikelements an der Oberfläche des Optikelements anliegend angeordnet ist.

Die erste Endstellung und/oder die zweite Endstellung können eine Parkposition der Wischvorrichtung umfassen, in der die Wischvorrichtung, insbesondere das erste Antriebsmittel und/oder das zweite Antriebsmittel still stehen.

In der Parkposition ist die im Wischelement vorherschende Spannung gering, wodurch Verschleiß reduziert und die Lebensdauer der Wischvorrichtung, insbesondere des Wischelements erhöht ist.

Darüber hinaus wird die Aufgabe gelöst durch eine eingangs genannte Optikeinrichtung mit mindestens einem scheiben- und/oder kalottenförmigen Optikelement und mit mindestens einer Wischvorrichtung, insbesondere mit mindestens einem der zuvor genannten Merkmale, bei der dass das erste Antriebsmittel und/oder das zweite Antriebsmittel mindestens eine Kinematik umfasst, durch die das Wischelement von der ersten Endstellung in die zweite Endstellung durch eine Translationsbewegung, insbesondere Linearbewegung, überführbar ist.

Das Optikelement kann beispielsweise eine Scheibe, ein Prisma oder eine Linse umfassen. Die Optikeinrichtung kann darüber hinaus eine Kamera oder einen Sensor umfassen.

Schließlich wird die Aufgabe erfindungsgemäß gelöst durch ein Verfahren zum Reinigen eines scheiben- und/oder kalottenförmigen Optikelements einer Optikeinrichtung, insbesondere mit einem der zuvor genannten Merkmale, eines Kraftfahrzeugs mit einer Wischvorrichtung, insbesondere mit mindestens einem der zuvor genannten Merkmale, mit den Schritten:
a) Bestromen und/oder Erhitzen eines Formgedächtniselements einer ersten Antriebseinheit;
b) Überführen eines Wischelements der Wischvorrichtung durch die erste Antriebseinheit der Wischvorrichtung aus einer ersten Endstellung in einer zweite Endstellung;
c) Beenden des Bestromens und/oder Erhitzens des ersten Antriebselements;
d) Überführen des Wischelements der Wischvorrichtung durch eine zweite Antriebseinheit der Wischvorrichtung aus der zweiten Endstellung in die erste Endstellung.

Die erfindungsgemäße Wischvorrichtung, die erfindungsgemäße Optikeinrichtung sowie das erfindungsgemäße Verfahren erweisen sich in mehrfacher Hinsicht als vorteilhaft:

Dadurch, dass das erste Antriebsmittel und/oder das zweite Antriebsmittel eine Kinematik umfasst, durch die das Wischelement von der ersten Endstellung in die zweite Endstellung durch eine Translationsbewegung, insbesondere Linearbewegung überführbar ist, ist eine alternative, zweckmäßige Bauform einer Wischvorrichtung zur Verfügung gestellt. Durch diese kann das Auftreten großer Drehmomente am Wischelement reduziert werden.

Wenn das Wischelement mit seinen Enden an jeweils einer Antriebseinheit festgelegt ist, lässt sich eine homogene Anpresskraft des Wischelements an die Oberfläche des Optikelements erzielen, wodurch das Reinigungsergebnis erhöht wird.

Dadurch, dass das erste Antriebsmittel und/oder das zweite Antriebsmittel ein Formgedächtniselement umfasst, lässt sich die Antriebseinheit einfach und kostengünstig umsetzten. Wenn das erste Antriebsmittel und/oder das zweite Antriebsmittel eine Rückstellfeder umfasst lässt sich das Wischelement automatisch in die erste Endstellung zurückführen, sobald das Formgedächtniselement unbestromt und/oder eine bestimmte Temperatur unterschritten hat.

Weitere Merkmale Weitere Merkmale, Einzelheiten sowie Vorteile der Erfindung ergeben sich aus den beigefügten Patentansprüche, aus den zeichnerischen Darstellungen und nachfolgender Beschreibung einer bevorzugten Ausführungsform einer erfindungsgemäßen Wischervorrichtung.

In der Zeichnung zeigt:
- Figur 1: eine schematische Draufsicht auf eine Wischvorrichtung;
- Figur 2: eine schematische Seitenansicht auf die Wischvorrichtung gemäß Figur 1,

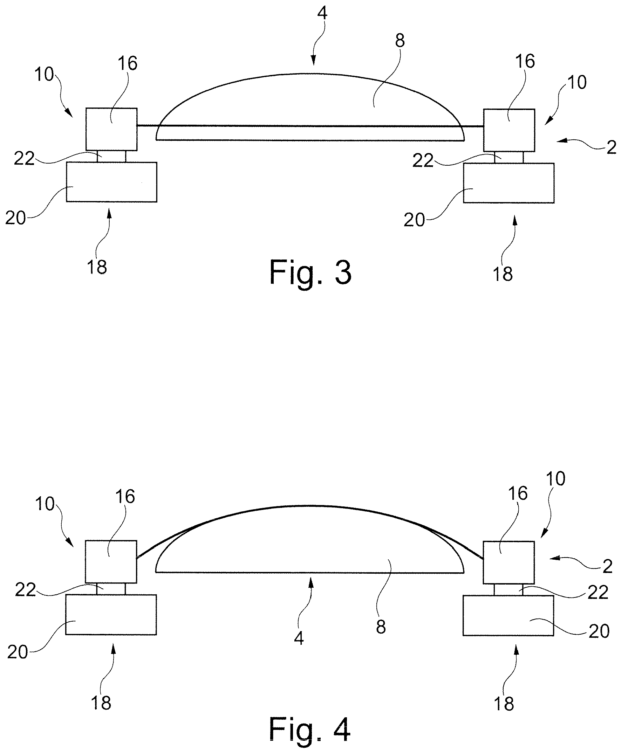

- Figur 3: eine schematischer Vorderansicht auf die Wischvorrichtung gemäß Figur 1 in der ersten Endstellung;

- Figur 4: eine schematische Draufsicht auf das Ausführungsbeispiel gemäß Figur 1.

Die Figuren zeigen eine insgesamt mit dem Bezugszeichen 2 versehene Wischvorrichtung für eine Optikeinrichtung 4 eines Kraftfahrzeugs. Die Wischvorrichtung 2 umfasst bei dem in den Figuren dargestellten Ausführungsbeispiel ein Wischelement 6, das von einer ersten Endstellung E1 in eine zweite Endstellung E2 überführbar ist. Beim Überführen des Wischelements 6 von der ersten Endstellung E1 in die zweite Endstellung E2 wird das Wischelement 6 über die Oberfläche eines Optikelements 8 in der Optikeinrichtung 4 bewegt und reinigt diese hierdurch.

Um das Wischelement von der ersten Endstellung E1 in die zweite Endstellung E2 zu überführen, umfasst die Wischvorrichtung 2 zwei Antriebseinheiten 10. Jede Antriebseinheit 10 hat ein erstes Antriebsmittel 12 und ein zweites Antriebsmittel 14. Um das Wischelement 6 mit der Antriebseinheit 10 zu verbinden, umfasst jede Antriebseinheit 10 zusätzlich ein Haltemittel 16, in das das Wischelement 6 eingespannt ist.

Durch das erste Antriebsmittel 12 und das zweite Antriebsmittel 14 wird das Wischelement 6 von der ersten Endstellung E1 in die zweite Endstellung E2 mittels einer Translationsbewegung, insbesondere Linearbewegung, überführt. Um diese Bewegung zu unterstützen umfasst die Wischvorrichtung 2 zwei Führungsmittel 18, die jeweils eine Führungsschiene 20 und ein in der Führungsschiene 20 gleitend bewegbares Schlittenelement 22 umfassen.

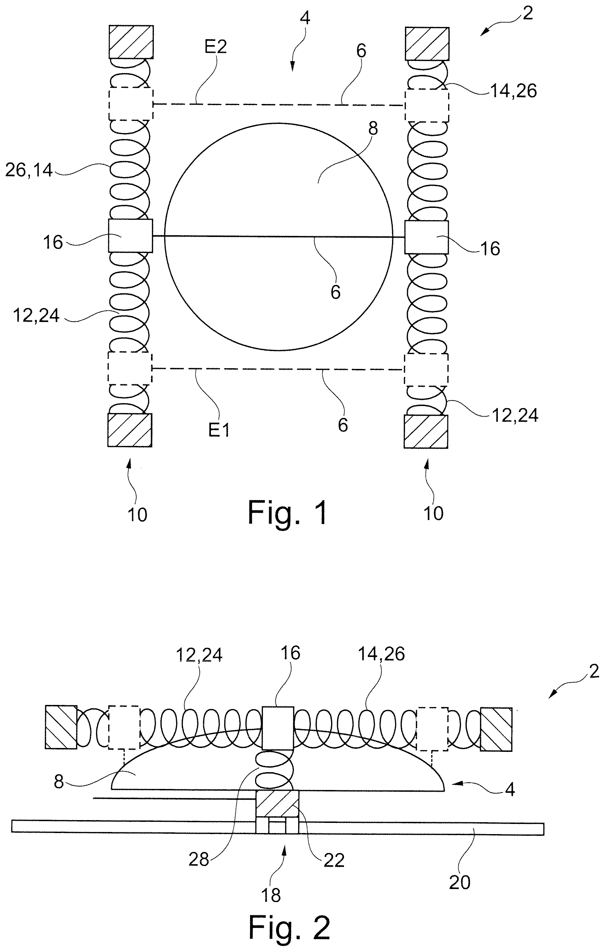

Figur 1 zeigt das Wischelement 6 beim Überführen von der ersten Endstellung E1 in die zweite Endstellung E2. Hierbei befindet sich das Wischelement 6 in der in Figur 1 dargestellten Form oberhalb des Optikelement 8. Gestrichelt sind in Figur 1 das Wischelement 6 und die Haltemittel 16 in der ersten Endstellung E1 sowie in der zweiten Endstellung E2 dargestellt. Wie aus Figur 1 ersichtlich, ist das Wischelement 6 in der ersten Endstellung E1 berührungsfrei zu einem Rand in der Oberfläche des Optikelements 8 beabstandet. In der zweiten Endstellung E2 ist das Wischelement ebenfalls zum Rand der Oberfläche des Optikelements 8, jedoch auf einer der ersten Endstellung E1 gegenüberliegenden Seide des Optikelements 8 zum Rand des Optikelements 8 beabstandet angeordnet. Bei dem in den Figuren gezeigten Ausführungsbeispiel umfasst das erste Antriebsmittel 12 ein Formgedächtniselement, insbesondere eine Formgedächtnisfeder 24. Um das Wischelement 6 in die zweite Endstellung E2 zu überführen, umfasst das zweite Antriebsmittel 14 eine Rückstellfeder 26.

Bei dem in den Figuren gezeigten Ausführungsbeispiel ist das Wischelement 6 durch einen Wischkörper, insbesondere durch eine Gummilippe gebildet. Um die Antriebskraft zwischen dem Wischelement 6 und dem kalottenförmigen Optikelement 8 zu erhöhen, umfasst die Wischvorrichtung 2 ein Spannmittel 28, mit dem das Wischelement 6 in Richtung auf die Oberfläche des Optikelements 8 spannbar ist. Das Spannmittel 28 kann beispielsweise eine Spannfeder umfassen.

### Bezugszeichenliste

- 2: Wischvorrichtung
- 4: Optikeinrichtung
- 6: Wischelement
- 8: Optikelement
- 10: Antriebseinheit
- 12: erstes Antriebsmittel
- 14: zweites Antriebsmittel
- 16: Haltemittel
- 18: Führungsmittel
- 20: Führungsschiene
- 22: Schlittenelement
- 24: Formgedächtnisfeder
- 26: Rückstellfeder
- 28: Spannmittel

## Patentansprüche

1. Wischvorrichtung (2) für eine Optikeinrichtung (4) eines Kraftfahrzeugs, mit mindestens einem Wischelement (6), das beim Überführen von einer ersten Endstellung (E1) in eine zweite Endstellung (E2) über eine Oberfläche eines scheiben- und/oder kalottenförmigen Optikelements (8) der Optikeinrichtung (4) bewegbar ist, und mit mindestens einer Antriebseinheit (10), die mindestens ein Haltemittel (16) zum Festlegen des Wischelements (6) an der Antriebseinheit (10) sowie mindestens ein erstes Antriebsmittel (12) und mindestens ein zweites Antriebsmittel (14) umfasst, von denen mindestens ein Antriebsmittel (12, 14) zumindest abschnittsweise mindestens ein Formgedächtniselement aufweist, **dadurch gekennzeichnet, dass** das erste Antriebsmittel (12) und/oder das zweite Antriebsmittel (14) mindestens eine Kinematik umfasst, durch die das Wischelement (6) von der ersten Endstellung (E1) in die zweite Endstellung (E2) durch eine Translationsbewegung, insbesondere Linearbewegung, überführbar ist.

2. Wischvorrichtung (2) nach Anspruch 1, **gekennzeichnet durch** mindestens eine Führungsmittel (18) zum Führen und/oder Vorgeben der Translationsbewegung, insbesondere Linearbewegung, der mindestens einen Antriebseinheit (10).

3. Wischvorrichtung (2) nach Anspruch 2, **dadurch gekennzeichnet, dass** das mindestens eine Führungsmittel (18) mindestens eine Führungsschiene (20) und mindestens ein in der Führungsschiene (20) gleitend bewegbares Schlittenelement (22) umfasst und/oder dass das Schlittenelement (22) am Haltemittel (16), am ersten Antriebsmittel (12) und/oder am zweiten Antriebsmittel (14) anordenbar oder angeordnet ist, insbesondere einstückig mit dem Haltemittel (16), dem ersten Antriebsmittel (12) und/oder dem zweiten Antriebsmittel (14) ausgebildet ist.

4. Wischvorrichtung (2) nach mindestens einem der vorhergehenden Ansprüche, **dadurch gekennzeichnet, dass** das erste Antriebsmittel (12) und/oder das zweite Antriebsmittel (14) mindestens ein Rückstellmittel, insbesondere Rückstellfeder (26), umfasst, das das Wischelement (6) in die erste Endstellung vorspannt und/oder dass das erste Antriebsmittels (12) und/oder das zweite Antriebsmittel (14) mindestens eine Formgedächtnisfeder (24) aufweist, die das mindestens eine Formgedächtniselement umfasst und mit der das Wischelement (6) in die zweite Endstellung überführbar ist.

5. Wischvorrichtung (2) nach mindestens einem der vorhergehenden Ansprüche, **dadurch gekennzeichnet, dass** das Wischelement (6) einen biegesteifen Wischkörper umfasst, der mindestens einen Wischabschnitt umfasst, der korrespondieren, insbesondere komplementär, zur Oberfläche des Optikelements (8) ausgebildet ist, und/oder dass das Wischelement (6) einen zumindest biegeelastischen Körper umfasst.

6. Wischvorrichtung (2) nach Anspruch 5, **dadurch gekennzeichnet, dass** der Wischkörper einen Kunststoff, insbesondere eine Gummilippe, umfasst.

7. Wischvorrichtung (2) nach mindestens einem der vorhergehenden Ansprüche, mit mindestens einem Spannmittel (28), mit dem das Wischelement (6) in Richtung auf die Oberfläche des Optikelements (8) spannbar ist.

8. Wischvorrichtung (2) nach mindestens einem der vorhergehenden Ansprüche, mit mindestens einem Spannmittel (28), mit mindestens zwei Antriebseinheiten (10), mit mindestens einem zwei im Wesentlichen parallel zueinander erstreckt verlaufende Führungsschienen (20) umfassenden Führungsmittel (18) und mit mindestens einem Wischelement (6), das mit seinen Enden an den Haltemitteln (16) der beiden Antriebseinheiten (10) festgelegt ist.

9. Wischvorrichtung (2) nach mindestens einem der vorhergehenden Ansprüche, **dadurch gekennzeichnet, dass** das Wischelement (6) in der ersten Endstellung berührungsfrei zu einem Rand der Oberfläche des Optikelements (8) beabstandet ist oder in einem Randbereich des Optikelements (8) an der Oberfläche anliegend angeordnet ist und/oder dass das Wischelement (6) in der zweiten Endstellung zu einem Rand der Oberfläche des Optikelements (8) auf einer der ersten Endstellung gegenüberliegenden Seite des Optikelements (8) beabstandet ist oder in einem Randbereich auf der der ersten Endstellung gegenüberliegenden Seite des Optikelements (8) an der Oberfläche des Optikelements (8) anliegend angeordnet ist.

10. Optikeinrichtung (4) für ein Kraftfahrzeug mit mindestens einem scheiben- und/oder kalottenförmigen Optikelement (8) und mit mindestens einer Wischvorrichtung (2), insbesondere nach einem der Ansprüche 1 bis 9, die mit mindestens ein Wischelement (6), das beim Überführen von einer ersten Endstellung in eine zweite Endstellung über eine Oberfläche eines scheiben- und/oder kalottenförmigen Optikelements (8) der Optikeinrichtung (4) bewegbar ist, und das mindestens einer Antriebseinheit (10) aufweist, die mindestens ein Haltemittel (16) zum Festlegen des Wischelements (6) an der Antriebseinheit (10) sowie mindestens ein erstes Antriebsmittel (12) und mindestens ein zweites Antriebsmittel (14) umfasst, von denen mindestens ein Antriebsmittel (14) (12) zumindest abschnittsweise mindestens ein Formgedächtniselement aufweist, **dadurch gekennzeichnet, dass** das erste Antriebsmittel (12) und/oder das zweite Antriebsmittel (14) mindestens eine Kinematik umfasst, durch die das Wischelement (6) von der ersten Endstellung in die zweite Endstellung durch eine Translationsbewegung, insbesondere Linearbewegung, überführbar ist.

11. Verfahren zum Reinigen eines scheiben- und/oder kalottenförmigen Optikelements (8) einer Optikeinrichtung (4), nach Anspruch 10, eines Kraftfahrzeugs mit einer Wischvorrichtung (2), nach einem der Ansprüche 1 bis 9, mit den Schritten:
a) Bestromen und/oder Erhitzen eines Formgedächtniselements einer ersten Antriebseinheit (10);
b) Überführen eines Wischelements (6) der Wischvorrichtung (2) durch die erste Antriebseinheit (10) der Wischvorrichtung (2) aus einer ersten Endstellung in einer zweite Endstellung;
c) Beenden des Bestromens und/oder Erhitzens des ersten Antriebselements;
d) Überführen des Wischelements (6) der Wischvorrichtung (2) durch eine zweite Antriebseinheit (10) der Wischvorrichtung (2) aus der zweiten Endstellung in die erste Endstellung.

## Claims

1. Wiper device (2) for an optical device (4) of a motor vehicle, having at least one wiper element (6) which is movable when transferred from a first end position (E1) into a second end position (E2) via a surface of a disc- and/or dome-shaped optical element (8) of the optical device (4) and having at least one drive unit (10), which comprises at least one holding means (16) for fixing the wiper element (6) to the drive unit (10) as well as at least one first drive means (12) and at least one second drive means (14) of which at least one drive means (12, 14) has at least one shape memory element at least in sections, **characterised in that** the first drive means (12) and/or the second drive means (14) comprises at least one kinematics by way of which the wiper element (6) can be transferred from the first end position (E1) into the second end position (E2) by a translational movement, in particular a linear movement.

2. Wiper device (2) according to claim 1, **characterised in that** at least one guide means (18) for guiding and/or specifying the translational movement, in particular linear movement, of the at least one drive unit (10).

3. Wiper device (2) according to claim 2, **characterised in that** at least one guide means (18) comprises at least one guide rail (20) and at least one sliding element (22) glidingly movable in the guide rail (20) and/or **in that** the sliding element (22) can be arranged or is arranged on the holding means (16), on the first drive means (12) and/or on the second drive means (14), in particular it is configured in one piece with the holding means (16), the first drive means (12) and/or the second drive means (14).

4. Wiper device (2) according to at least one of the preceding claims, **characterised in that** the first drive means (12) and/or the second drive means (14) comprise at least one return means, in particular return spring (26) which pretensions the wiper element (6) into the first end position and/or **in that** the first drive means (12) and/or the second drive means (14) has at least one shape memory spring (24) which comprises at least one shape memory element and by means of which the wiper element (6) can be transferred into the second end position.

5. Wiper device (2) according to at least one of the preceding claims, **characterised in that** the wiper element (6) comprises a rigid wiper body which comprises at least one wiper section which is configured corresponding, in particular complementarily to the surface of the optical element (8) and/or **in that** the wiper element (6) comprises an at least flexible body.

6. Wiper device (2) according to claim 5, **characterised in that** the wiper body comprises a plastic, in particular a rubber lip.

7. Wiper device (2) according to any one of the preceding claims, having at least one clamping means (28), by means of which the wiper element (6) can be clamped in the direction of the surface of the optical element (8).

8. Wiper device (2) according to at least one of the preceding claims, having at least one clamping means (28), having at least two drive units (10), having at least one guide means (18) comprising two guide rails (20) running substantially parallel to each other and having at least one wiper element (6) which is fixed with its ends to the holding means (16) of the two drive units (10).

9. Wiper device (2) according to at least one of the preceding claims, **characterised in that** the wiper element (6) is spaced in the first end position in a contact-free manner from an edge of the surface of the optical element (8) or is arranged resting on the surface in an edge region of the optical element (8) and/or in that the wiper element (6) is spaced in the second end position from an edge of the surface of the optical element (8) on the side of the optical element (8) opposing the first end position or is arranged resting on the surface of the optical element (8) in an edge region on the side of the optical element (8) opposing the first end position.

10. Optical device (4) for a motor vehicle having at least one disc- and/or dome-shaped optical element (8) and having at least one wiper device (2), in particular according to any one of claims 1 to 9 which has at least one wiper element (6) which is movable when transferred from a first end position into a second end position via a surface of a disc- and/or dome-shaped optical element (8) of the optical device (4) and has at least one drive unit (10) which comprises at least one holding means (16) for fixing the wiper element (6) to the drive unit (10) as well as at least one first drive means (12) and at least one second drive means (14) of which at least one drive means (14) (12) has at least one shape memory element at least in sections, **characterised in that** the first drive means (12) and/or the second drive means (14) comprises at least one kinematics by means of which the wiper element (6) can be transferred from the first end position into the second end position by way of a translational movement, in particular a linear movement.

11. Method for cleaning a disc- and/or dome-shaped optical element (8) of an optical device (4) according to claim 10, of a motor vehicle with a wiper device (2) according to any one of claims 1 to 9, comprising the steps:
a) energising and/or heating a shape memory element of a first drive unit (10);
b) transferring a wiper element (6) of the wiper device (2) by way of the first drive unit (10) of the wiper device (2) from a first end position in a second end position;
c) ending the energising and/or heating process of the first drive element;
d) transferring the wiper element (6) of the wiper device (2) by way of a second drive unit (10) of the wiper device (2) from the second end position into the first end position.

## Revendications

1. Dispositif d'essuyage (2) pour un système optique (4) d'un véhicule automobile, comprenant au moins un élément d'essuyage (6), qui peut être déplacé, lors du transfert d'une première position finale (E1) dans une deuxième position finale (E2), au-dessus d'une surface d'un élément optique (8) d'une forme de disque et/ou de calotte, du système optique (4), et comprenant au moins une unité d'entraînement (10), qui comprend au moins un moyen de maintien (16) servant à fixer l'élément d'essuyage (6) au niveau de l'unité d'entraînement (10) ainsi qu'au moins un premier moyen d'entraînement (12) et au moins un deuxième moyen d'entraînement (14), parmi lesquels au moins un moyen d'entraînement (12, 14) présente au moins par endroits au moins un élément à mémoire de forme, **caractérisé en ce que** le premier moyen d'entraînement (12) et/ou le deuxième moyen d'entraînement (14) comprennent au moins une cinématique, par laquelle l'élément d'essuyage (6) peut être transféré de la première position finale (E1) dans la deuxième position finale (E2) par un déplacement de translation, en particulier par un déplacement linéaire.

2. Dispositif d'essuyage (2) selon la revendication 1, **caractérisé par** au moins un moyen de guidage (18) servant à guider et/ou à prédéfinir le déplacement par translation, en particulier le déplacement linéaire, de l'au moins une unité d'entraînement (10).

3. Dispositif d'essuyage (2) selon la revendication 2, **caractérisé en ce que** l'au moins un moyen de guidage (18) comprend au moins un rail de guidage (20) et au moins un élément de chariot (22) pouvant être déplacé par glissement dans le rail de guidage (20), et/ou que l'élément de chariot (22) peut être disposé ou est disposé au niveau du moyen de retenue (16), au niveau du premier moyen d'entraînement (12) et/ou au niveau du deuxième moyen d'entraînement (14), en particulier est réalisé d'un seul tenant avec le moyen de maintien (16), le premier moyen d'entraînement (12) et/ou le deuxième moyen d'entraînement (14).

4. Dispositif d'essuyage (2) selon au moins l'une quelconque des revendications précédentes, **caractérisé en ce que** le premier moyen d'entraînement (12) et/ou le deuxième moyen d'entraînement (14) comprennent au moins un moyen de rappel, en particulier un ressort de rappel (26), qui précontraint l'élément d'essuyage (6) dans la première position finale et/ou que le premier moyen d'entraînement (12) et/ou le deuxième moyen d'entraînement (14) présentent un ressort à mémoire de forme (24), qui comprend l'au moins un élément à mémoire de forme et à l'aide duquel l'élément d'essuyage (6) peut être transféré dans la deuxième position finale.

5. Dispositif d'essuyage (2) selon au moins l'une quelconque des revendications précédentes, **caractérisé en ce que** l'élément d'essuyage (6) comprend un corps d'essuyage rigide en flexion, qui comprend au moins un tronçon d'essuyage, qui est réalisé de manière correspondante, en particulier de manière complémentaire, à la surface de l'élément optique (8), et/ou que l'élément d'essuyage (6) comprend un corps au moins élastique en flexion.

6. Dispositif d'essuyage (2) selon la revendication 5, **caractérisé en ce que** le corps d'essuyage comprend une matière plastique, en particulier une lèvre en caoutchouc.

7. Dispositif d'essuyage (2) selon au moins l'une quelconque des revendications précédentes, comprenant au moins un moyen de serrage (28), à l'aide duquel l'élément d'essuyage (6) peut être serré en direction de la surface de l'élément optique (8).

8. Dispositif d'essuyage (2) selon au moins l'une quelconque des revendications précédentes, comprenant au moins un moyen de serrage (28), comprenant au moins deux unités d'entraînement (10), comprenant au moins un moyen de guidage (18) comprenant deux rails de guidage (20) s'étendant sensiblement de manière parallèle l'un par rapport à l'autre, et comprenant au moins un élément d'essuyage (6), qui est fixé par ses extrémités au niveau des moyens de retenue (16) des deux unités d'entraînement (10).

9. Dispositif d'essuyage (2) selon au moins l'une quelconque des revendications précédentes, **caractérisé en ce que** l'élément d'essuyage (6) est tenu à distance, dans la première position finale, sans contact par rapport à un bord de la surface de l'élément optique (8) ou est disposé de manière à reposer dans une zone de bord de l'élément optique (8) au niveau de la surface, et/ou que l'élément d'essuyage (6) est tenu à distance, dans la deuxième position finale, par rapport à un bord de la surface de l'élément optique (8), sur un côté, faisant face à la première position finale, de l'élément optique (8) ou est disposé de manière à reposer dans une zone de bord sur le côté, faisant face à la première position finale, de l'élément optique (8) au niveau de la surface de l'élément optique (8).

10. Système optique (4) pour un véhicule automobile comprenant au moins un élément optique (8) d'une forme de disque et/ou de calotte et comprenant au moins un dispositif d'essuyage (2) en particulier selon l'une quelconque des revendications 1 à 9, lequel dispositif d'essuyage présente au moins un élément d'essuyage (6), qui peut être déplacé lors du transfert d'une première position finale dans une deuxième position finale, au-dessus d'une surface d'un élément optique (8), d'une forme de disque et/ou de calotte, du système optique (4), et au moins une unité d'entraînement (10), qui comprend au moins un moyen de maintien (16) servant à fixer l'élément d'essuyage (6) au niveau de l'unité d'entraînement (10) ainsi qu'au moins un premier moyen d'entraînement (12) et au moins un deuxième moyen d'entraînement (14), parmi lesquels au moins un moyen d'entraînement (14) (12) présente au moins par endroits au moins un élément à mémoire de forme, **caractérisé en ce que** le premier moyen d'entraînement (12) et/ou le deuxième moyen d'entraînement (14) comprennent au moins une cinématique, par laquelle l'élément d'essuyage (6) peut être transféré de la première position finale dans la deuxième position finale par un déplacement par translation, en particulier par un déplacement linéaire.

11. Procédé servant à nettoyer un élément optique (8), d'une forme de disque et/ou de calotte, d'un système optique (4), selon la revendication 10, d'un véhicule automobile avec un dispositif d'essuyage (2) selon l'une quelconque des revendications 1 à 9, comprenant les étapes qui suivent consistant à :
a) alimenter en courant et/ou chauffer un élément à mémoire de forme d'une première unité d'entraînement (10) ;
b) transférer un élément d'essuyage (6) du dispositif d'essuyage (2) par la première unité d'entraînement (10) du dispositif d'essuyage (2) d'une première position finale dans une deuxième position finale ;
c) mettre fin à l'alimentation en courant et/ou au chauffage du premier élément d'entraînement ;
d) transférer l'élément d'essuyage (6) du dispositif d'essuyage (2) par une deuxième unité d'entraînement (10) du dispositif d'essuyage (2) de la deuxième position finale dans la première position finale.
